# EUROPEAN PATENT SPECIFICATION

(11) **EP 1 528 947 B1**
(45) Date of publication and mention of the grant of the patent: **14.01.2015**
(21) Application number: 02722572.1
(22) Date of filing: 16.04.2002
(51) Int. Cl.: A62B 19/00, B01J 8/02

(54) **CHEMICAL BED DESIGN**
ENTWURF EINES CHEMISCHEN BETTES
DISPOSITIF A LIT CHIMIQUE

(43) Date of publication of application: 11.05.2005
(73) Proprietor: AFRICAN OXYGEN LIMITED, Johannesburg, 2001 Gauteng Province (ZA)
(72) Inventor: WIID, Christoffel Francois, Pretoria, 0044 Gauteng (ZA)
(74) Representative: Gellner, Bernd
(86) International application number: PCT/IB2002/001224
(87) International publication number: WO 2003/086544

(56) References cited:
- DE-C- 297 927
- DE-C- 302 014
- US-A- 3 403 981
- US-A- 3 575 167
- US-A- 3 719 456
- US-A- 4 019 509

## Description

This invention relates to the design of a chemical bed reactor, and it relates to a method of operating a chemical bed reactor. More particularly, the invention relates to such chemical reactor and method of operation, suitable for, but not limited to, employment in the context of a self-contained rescue device.

One of such chemical bed reactors for breathing devices is disclosed in US 4,019,509 A.

According to the invention there is provided a chemical reactor for use as, or as part of, a breathing apparatus, the reactor including a vented canister for holding a bed of particulate chemical reagent, the canister having a peripheral wall enclosing the interior of the canister and the canister having a floor for the interior of the canister;
an air-permeable bed support lining the upper surface of the floor for supporting a bed of particulate reagent in the interior of the canister, the canister having at least one upper air vent at a level above the bed support, and at least one lower air vent below the support and through the floor; and
at least one air-permeable air flow guide in the interior of the canister for guiding air flow between the bed support and the upper vent of the canister and through a bed of particulate chemical reagent supported in the interior of the canister on the bed support of the canister, each air flow guide projecting from a lower extremity thereof at or adjacent the bed support of the canister, in an upward direction.

The canister may be in the form of a rectangular open-topped box having a flat rectangular floor lined by the bed support, the box containing an air-permeable bed of particulate chemical reagent in its interior and supported on the bed support, each air flow guide having an air-permeability which is greater than the air-permeability of the bed, the open top of the box forming the upper vent of the box and the floor having a plurality of spaced evenly dispersed lower vents therethrough. Each air flow guide may be in contact with the bed support so that it rests on, and is supported by, the bed support each air flow guide projecting upwardly from the bed support to an upper extremity of the air flow guide, which upper extremity is located at a level at or adjacent the upper surface of the bed, the contact between each air flow guide and the bed support permitting air flow between the air-permeable interior of each air flow guide and the air-permeable interior of the bed support where the air flow guide rests on the bed support, the particulate material of the bed being a granular material. By granular is meant that the particulate material has particles which are more or less irregular-spherical in shape, none of the particles having a largest dimension which is more than double its smallest dimension. Each air flow guide may have a lower end portion of enlarged cross-section, the cross-section of the lower end portion tapering upwardly from a broad lower end thereof at the lower extremity of the air flow guide, to a narrow upper end thereof spaced above the broad lower end, the narrow upper end of the lower end portion merging into an upper portion of the air flow guide, which upper portion is of constant cross-section over its full height.

Each air flow guide may comprise a partition in the interior of the canister which provides a wall for separating parts of a bed of particulate chemical reagent in the interior of the canister from each other or one another. There may be a single said air flow guide which comprises a bed divider made up of a plurality of partitions in the interior of the canister which provide walls which divide the interior of the canister into a plurality of separate compartments for containing separate parts of a bed of particulate chemical reagent in the interior of the container.

The bed support and each air flow guide may be formed of air-permeable wire mesh material, being resiliently flexible. The bed support and each air flow guide may be formed of a plurality of resiliently flexible layers of knitted wire mesh material. Two adjacent layers of the knitted wire mesh of each air flow guide may be spaced from each other by an air space.

The reactor may be for use as, or may be part of, a self-contained rescue device of the re-breathing type, for use with a particulate chemical reagent having air-purification properties.

Further according to the invention, in a chemical reactor for use as, or as part of, a breathing apparatus, the reactor including a vented canister for holding, in the interior of the canister on an air-permeable bed support lining the upper surface of a floor of the canister, a bed of particulate chemical reagent, which bed is air-permeable and whose particles are capable of deteriorating into a condition wherein the bed has reduced air-permeability, there is provided the method of operation which comprises guiding air through the interior of the bed along air-permeable interiors of one or more air-permeable air flow guides, each of which air flow guides is located in the bed and each of which air flow guides extends between two positions in the bed which are respectively at or adjacent the bed support and at or adjacent the upper surface of the bed.

The guiding of the air may include guiding it along air flow passages in the interiors of the air flow guides. The method may include holding the bed in one or more compartments in the interior of the canister, one or more of the compartments having at least one flexible wall for absorbing shocks and/or absorbing vibrations, for reducing damage to, and consequent size reduction and deterioration of, the particles of the bed arising from said shock and/or vibration.

The method may include promoting said shock - and/or vibration absorption by holding a plurality of parts of the bed in a plurality of compartments, each of which has at least one resiliently flexible wall supporting the particles of the bed and dividing the bed into said parts. Each flexible wall may be air-permeable, the guiding of the air being along the air-permeable interiors of the flexible walls.

The invention is now described, by way of an example, with reference to the accompanying diagrammatic drawings, in which:
Figure 1 shows schematically a sectional side elevation of a chemical reactor in accordance with the invention;
Figure 2 shows schematically a plan view of the reactor of Figure 1;
Figure 3 shows schematically a three-dimensional view of the reactor of Figures 1 and 2, without reactant; and
Figure 4 shows schematically a sectional side view of the reactor of Figures 1 - 3 in use.

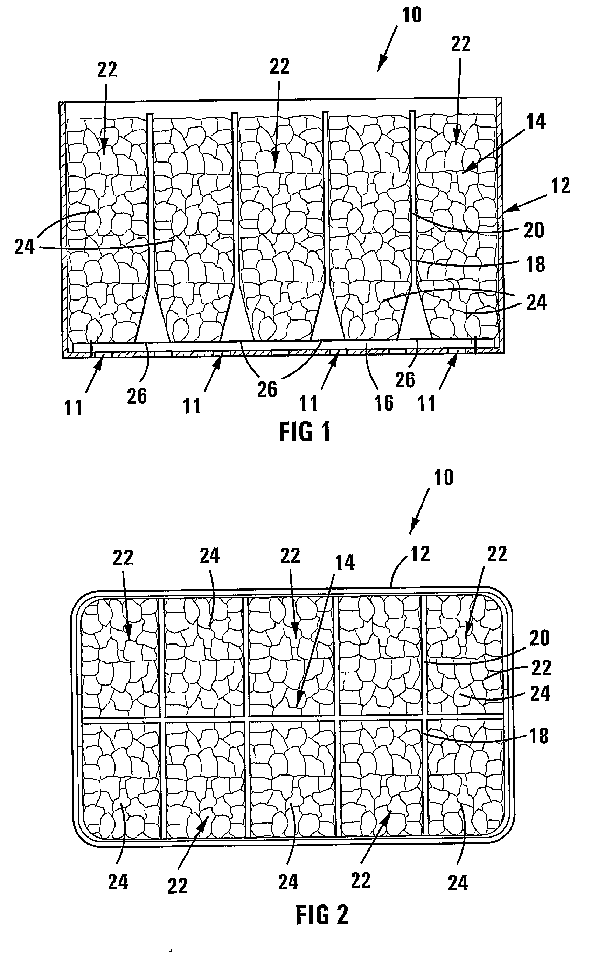

Referring first to Figures 1 - 3, a chemical reactor in accordance with the invention, is generally indicated by reference numeral 10. The reactor 10 has a housing in the form of an open-topped rectangular box having a peripheral wall made up of a pair of longer side walls and a pair of shorter end walls, the box being elongated. The box has an elongated rectangular floor provided with a plurality of evenly dispersed spaced vents in the form of circular openings 11 therethrough.

The reactor 10, is for use in a self-contained rescue device of the re-breathing type comprising a rescue pack (not shown). The housing or box is designated 12 and houses a chemical reagent bed 14. The reagent bed 14 rests on an air-permeable bed support 16 that lines the floor of the box 10 and is substantially flat. A bed divider 18 forming an air-flow guide has air-permeable walls 20 which are substantially perpendicular to, and rest on, the bed support 16. The walls 20 provide a plurality of partitions which define ten compartments 22 in the box 12. A granular chemical reagent 24, forming the bed 14, is contained in each compartment 22, the bed 14 being air-permeable such that air can flow through the bed 14 of reagent 24, through the interiors of the walls 20 of the divider 18, and through the support 16 at contact regions 26 between the walls 20 of the divider 18 and the support 16. The support 16 and the divider 18 are each made of a plurality of layers (not shown) of knitted wire mesh and the divider walls 20 have enlarged lower end portions adjacent the support 16, the end portions tapering in a cross-reference section upwardly from the regions 26 to narrow upper end portions of the walls 20, the upper end portions being of constant cross-section.

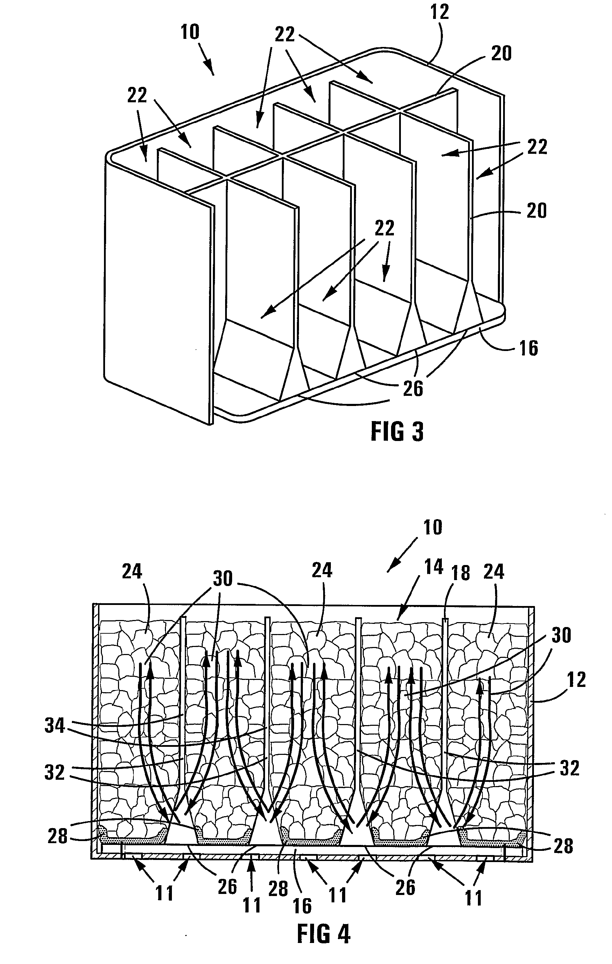

Referring also to Figure 4, a reactor used in a self-contained rescue pack is generally indicated by reference numeral 10, the same reference numerals designating the same parts as in Figures 1 - 3, unless otherwise specified.

In use, air will flow up and down through the bed 14, between the vents 11 in the floor of the box 12 and the open top of the box 12, passing through the air-permeable bed 14 of reagent 12, and through the air-permeable support 16 and air-permeable walls 20 of the divider 18. The granular reagent 24 of the reactor 10 in use deteriorates at least partially into a fluid paste-like state and flows downwardly towards the bottom of each compartment 22, where it is shown at 28, thereby restricting air flow through the bottom of each compartment 22 and through the support 16. Sufficient air flow, indicated by the arrows 30, is maintained through the bed 14 of granular chemical reagent 24 by providing air flow passages at 32 in the bed 14 of reagent 24. The air flow passages at 32 are provided by empty spaces at 34 between knitted layers of the wire mesh walls 20 dividing the bed 14, and between the knitted layers of the wire mesh bed support 16 supporting the bed 14.

The wire mesh forming the divider 18 is resiliently flexible. Thus, size reduction and the formation of powder from the granular chemical reagent 24 arising from shock and vibration are inhibited by containing the granular reagent 24 within the compartments 22 defined by the resiliently flexible divider 18 which absorbs shocks and vibrations.

Powder formation and associated deterioration of the chemical reagent 24 is further inhibited by filling the compartments 22 defined by the partitions 20 of the divider 18 with granular reagent 24 so as to leave the partitions 20 and bed support 16 in a resiliently stressed state. The wire mesh partitions 20 and bed support 16 are resiliently flexible and remain resiliently stressed, so that they are urged continuously to contact with the reagent 24 of the bed 14, despite any decrease in its volume arising from deterioration of the reagent 24.

The main advantages of this invention promise to be that sufficient air flow through the bed 14 of granular chemical reagent 24 is permitted, despite deterioration of the reagent 24, and that contact between the air and the reagent 24 can at least partly be maintained as a result of air flow through the layers of knitted wire mesh of the support 16 and divider 18, where the support 16 and divider 18 are in contact with the material 24. A further advantage of the invention is that mechanical deterioration of the granular reagent 24 is inhibited when the reactor 10 is subjected to shocks and/or vibrations. This inhibition is by virtue of the shock-absorbency of the support 16 and divider 18. The knitted wire mesh of the support 16 and divider 18 also allow powder and dust from the bed 14 to fall away, out of the reactor 10 through the openings 11, while containing larger granules inside the box 12 of the reactor 10.

## Claims

1. A chemical reactor (10) for use as, or as part of, a breathing apparatus, the reactor (10) including a vented canister (12) for holding a bed (14) of particulate chemical reagent (24), the canister (12) having a peripheral wall enclosing the interior of the canister (12) and the canister (12) having a floor for the interior of the canister (12);
an air-permeable bed support (16) lining the upper surface of the floor for supporting a bed (14) of particulate reagent (24) in the interior of the canister (12), the canister (12) having at least one upper air vent at a level above the bed support (16), and at least one lower air vent (11) below the support (16) and through the floor; the reactor (10) being **characterized in that** it includes
at least one air-permeable air flow guide (20) in the interior of the canister (12) for guiding air flow between the bed support (16) and the upper vent of the canister (12) and through a bed (14) of particulate chemical reagent (24) supported in the interior of the canister (12) on the bed support (16) of the canister (12), each air flow guide (20) projecting from a lower extremity thereof at or adjacent the bed support (16)of the canister (12), in an upward direction.

2. A reactor as claimed in Claim 1, **characterized in that** the canister (12) is in the form of a rectangular open-topped box (12) having a flat rectangular floor lined by the bed support (16), the box (12) containing an air-permeable bed (14) of particulate chemical reagent (24) in its interior and supported on the bed support (16), each air flow guide (20) having an air-permeability which is greater than the air-permeability of the bed (14), the open top of the box (12) forming the upper vent of the box and the floor having a plurality of spaced evenly dispersed lower vents (11) therethrough.

3. A reactor as claimed in Claim 2, **characterized in that** each air flow guide (20) is in contact with the bed support (16) so that it rests on, and is supported by, the bed support (16), each air flow guide (20) projecting upwardly from the bed support (16) to an upper extremity of the air flow guide (20), which upper extremity is located at a level at or adjacent the upper surface of the bed (14), the contact between each air flow guide (20) and the bed support (16) permitting air flow between the air-permeable interior of each air flow guide (20) and the air-permeable interior of the bed support (16) where the air flow guide (20) rests on the bed support (16), the particulate material (24) of the bed (14) being a granular material (24).

4. A reactor as claimed in any one of the preceding claims, **characterized in that** each air flow guide (20) has a lower end portion of enlarged cross-section, the cross-section of the lower end portion tapering upwardly from a broad lower end thereof at the lower extremity of the air flow guide (20), to a narrow upper and thereof spaced above the broad lower end, the narrow upper end of the lower end portion merging into an upper portion of the air flow guide (20), which upper portion is of constant cross-section over its full height.

5. A reactor as claimed in any one of the preceding claims, **characterized in that** each air flow guide (20) comprises a partition (20) in the interior of the canister (12) which provides a wall (20) for separating parts of a bed (14) of particulate chemical reagent (24) in the interior of the canister (12) from each other or one another.

6. A reactor is claimed in Claim 5, **characterized in that** there is a single said air flow guide (20) which comprises a bed divider made up of a plurality of partitions (20) in the interior of the canister which provide walls (20) which divide the interior of the canister (12) into a plurality of separate compartments (22) for containing separate parts of a bed (14) of particulate chemical reagent (24) in the interior of the container (12).

7. A reactor as claimed in any one of the preceding claims, **characterized in that** the bed support (16) and each air flow guide (20) are formed of air-permeable wire mesh material and are resiliently flexible.

8. A reactor as claimed in Claim 7, **characterized in that** the bed support (16) and each air flow guide (20) are formed of a plurality of resiliently flexible layers of knitted wire mesh material.

9. A reactor as claimed in Claim 8, **characterized in that** two adjacent layers of the knitted wire mesh of each air flow guide (20) are spaced from each other by an air space.

10. A self-contained rescue device of the re-breathing type, **characterized in that** it includes a reactor as claimed in any one of the preceding claims, for use with a particulate chemical reagent (24) having air-purification properties.

11. A method of operation of a chemical reactor (10) for use as, or as part of, a breathing apparatus, the reactor including a vented canister (12) for holding, in the interior of the canister (12) on an air-permeable bed support (1 6) lining the upper surface of a floor of the canister (12), a bed (14) of particulate chemical reagent (24), which bed (14) is air-permeable and whose particles (24) are capable of deteriorating into a condition wherein the bed (14) has reduced air-permeability, **characterized in that** it comprises guiding air through the interior of the bed (14) along air-permeable interiors of one or more air-permeable air flow guides (20), each of which air flow guides (20) is located in the bed (14) and each of which air flow guides (20) extends between two positions in the bed (14) which are respectively at or adjacent the bed support (16) and at or adjacent the upper surface of the bed (14).

12. A method as claimed in Claim 11, **characterized in that** the guiding of the air includes guiding it along air flow passages in the interiors of the air flow guides (20).

13. A method as claimed in Claim 11 or 12, **characterized in that** it includes holding the bed (14) in one or more compartments (22) in the interior of the canister (12), one or more of the compartments (22) having at least one flexible wall (20) for absorbing shocks and/or absorbing vibrations, for reducing damage to, and consequent size reduction and deterioration of, the particles (24) of the bed (14) arising from said shock and/or vibration.

14. A method as claimed in Claim 13, **characterized in that** it includes promoting said shock - and/or vibration absorption by holding a plurality of parts of the bed (14) in a plurality of compartments (22), each of which has at least one resiliently flexible wall (20) supporting the particles (24) of the bed (14) and dividing the bed (14) into said parts.

15. A method as claimed in Claim 13 and Claim 14, **characterized in that**
each flexible wall (20) is air-permeable, the guiding of the air being along the air-permeable interiors of the flexible walls (20).

## Patentansprüche

1. Chemischer Reaktor (10) zur Verwendung als oder als Teil eines Beatmungsgerätes, wobei der Reaktor (10) einen belüfteten Behälter (12) zum Halten eines Bettes (14) aus teilchenförmigem chemischen Reagens (24) aufweist, wobei der Behälter (12) eine Umfangswand aufweist, die den Innenraum des Behälters (12) einschließt und der Behälter (12) einen Boden für den Innenraum des Behälters (12) aufweist;
wobei ein luftdurchlässiger Bettträger (16) die obere Oberfläche des Bodens zum Tragen eines Betts (14) von teilchenförmigem Reagens (24) im Innenraum des Behälters (12) auskleidet, wobei der Behälter (12) mindestens eine obere Entlüftungsöffnung oberhalb des Bettträgers (16) aufweist und mindestens eine untere Entlüftungsöffnung (11) unterhalb des Trägers (16) und durch den Boden aufweist;
wobei der Reaktor (10) **dadurch gekennzeichnet ist, dass** er mindestens eine luftdurchlässige Luftströmungsführung (20) im Innenraum des Behälters (12) zum Führen des Luftstroms zwischen dem Bettträger (16) und der oberen Entlüftungsöffnung des Behälters (12) und durch ein Bett (14) aus teilchenförmigem chemischen Reagens (24), das sich im Innenraum des des Behälters (12) auf dem Bettträger (16) des Behälters (12) befindet, aufweist, wobei jede Luftströmungsführung (20) aus einem unteren Ende davon an dem oder benachbart zu dem Bettträger (16) des Behälters (12) in einer Aufwärtsrichtung hervorsteht.

2. Reaktor nach Anspruch 1, **dadurch gekennzeichnet, dass** der Behälter (12) in Form eines rechteckigen offenen Kastens (12) mit einem flachen rechteckigen Boden vorliegt, der von dem Bettträger (16) ausgekleidet wird, wobei der Kasten (12) ein luftdurchlässiges Bett (14) des teilchenförmigen chemischen Reagens (24) in seinem Innenraum enthält und von dem Bettträger (16) gehalten wird, wobei jede Luftströmungsführung (20) eine Luftdurchlässigkeit aufweist, die größer als die Luftdurchlässigkeit des Bettes (14) ist, wobei die offene Oberseite des Kastens (12) die obere Entlüftung des Kastens und den Boden bildet, der mehrere gleichmäßig verteilte untere Entlüftungsöffnungen (11) dadurch aufweist.

3. Reaktor nach Anspruch 2, **dadurch gekennzeichnet, dass** jede Luftströmungsführung (20) in Kontakt mit dem Bettträger (16) steht, so dass sie auf dem Bettträger (16) aufliegt oder davon gehalten wird, wobei jede Luftströmungsführung (20) nach oben von dem Bettträger (16) an einem oberen Ende der Luftströmungsführung (20) hochsteht, wobei das obere Ende auf einer Ebene mit oder benachbart zu der oberen Oberfläche des Betts (14) ist, wobei der Kontakt zwischen jeder Luftströmungsführung (20) und dem Bettträger (16) einen Luftstrom zwischen dem luftdurchlässigen Innenraum jeder Luftströmungsführung (20) und dem luftdurchlässigen Innenraum des Bettträgers (16) zulässt, wobei die Luftströmungsführung (20) auf dem Bettträger (16) aufliegt und wobei das Teilchenmaterial (24) des Bettes (14) ein Granulatmaterial (24) ist.

4. Reaktor nach einem der vorhergehenden Ansprüche, **dadurch gekennzeichnet, dass** jede Luftströmungsführung (20) einen unteren Endabschnitt mit vergrößertem Querschnitt aufweist, wobei sich der Querschnitt des unteren Endabschnitts von einem breiten unteren Ende am unteren Ende der Luftströmungsführung (20) zu einem schmalen oberen und davon über dem breiten unteren Ende beabstandeten Ende verjüngt, wobei das schmale obere Ende des unteren Endabschnitts in einen oberen Abschnitt der Luftströmungsführung (20) übergeht, wobei der obere Abschnitt einen konstanten Querschnitt über seine gesamte Höhe aufweist.

5. Reaktor nach einem der vorhergehenden Ansprüche, **dadurch gekennzeichnet, dass** jede Luftströmungsführung (20) eine Trennwand (20) im Innenraum des Behälters (12) umfasst, die eine Wand (20) zum Trennen von Teilen eines Bettes (14) von teilchenförmigem chemischen Reagens (24) im Innenraum des Behälters (12) voneinander oder miteinander bereitstellt.

6. Reaktor nach Anspruch 5, **dadurch gekennzeichnet, dass** dieser eine einzige Luftströmungsführung (20), die einen Bettteiler umfasst, der aus mehreren Trennwänden (20) im Innenraum des Behälters besteht, der Wände (20) bereitstellt, die den Innenraum des Behälters (12) in mehrere separate Fächer (22) unterteilen, um separate Teile eines Bettes (14) des teilchenförmigen chemischen Reagens (24) im Innenraum des Behälters (12) zu enthalten.

7. Reaktor nach einem der vorhergehenden Ansprüche, **dadurch gekennzeichnet, dass** der Bettträger (16) und jede Luftströmungsführung (20) aus einem luftdurchlässigen Drahtgestrickmaterial ausgebildet und elastisch flexibel sind.

8. Reaktor nach Anspruch 7, **dadurch gekennzeichnet, dass** der Bettträger (16) und jede Luftströmungsführung (20) aus mehreren elastisch flexiblen Schichten aus verwobenem Drahtgestrickmaterial ausgebildet sind.

9. Reaktor nach Anspruch 8, **dadurch gekennzeichnet, dass** zwei benachbarte Schichten des Drahtgestricks jeder Luftströmungsführung (20) voneinander durch einen Luftspalt beabstandet sind.

10. In sich geschlossene Wiederbeatmungs-Rettungsvorrichtung, **dadurch gekennzeichnet, dass** diese einen Reaktor nach einem der vorhergehenden Ansprüche zur Verwendung mit einem teilchenförmigen chemischen Reagens (24) mit Luftreinigungseigenschaften aufweist.

11. Verfahren zum Betreiben eines chemischen Reaktors (10) zur Verwendung als oder als Teil eines Atemschutzgerätes, wobei der Reaktor einen belüfteten Behälter (12) zum Halten eines luftdurchlässigen Bettträgers (16) im Innenraum des Behälters (12), der die obere Oberfläche eines Bodens des Behälters (12) auskleidet, und ein Bett (14) aus teilchenförmigem chemischen Reagens (24) aufweist, wobei das Bett (14) luftdurchlässig ist und die Teilchen (24) in einen Zustand abgebaut werden können, in dem das Bett (14) eine geringere Luftdurchlässigkeit aufweist,
**dadurch gekennzeichnet, dass** es das Führen von Luft durch den Innenraum des Betts (14) entlang der luftdurchlässigen Innenräume einer oder mehrerer luftdurchlässiger Luftströmungsführungen (20) umfasst, wobei jede der Luftströmungsführungen (20) in dem Bett (14) angeordnet ist und sich jede Luftstromführung (20) zwischen zwei Positionen in dem Bett (14) erstreckt, die sich jeweils an oder benachbart zu dem Bettträger (16) und an oder benachbart zu der oberen Oberfläche des Betts (14) befinden.

12. Verfahren nach Anspruch 11, **dadurch gekennzeichnet, dass** das Führen der Luft das Führen davon entlang der Luftströmungskanäle in den Innenräumen der Luftströmungsführungen (20) einschließt.

13. Verfahren nach Anspruch 11 oder 12, **dadurch gekennzeichnet, dass** es das Halten des Betts (14) in einem oder mehreren Fächern (22) im Innenraum des Behälters (12) einschließt, wobei eines oder mehrere der Fächer (22) mindestens eine flexible Wand (20) zum Aufnehmen von Erschütterungen und/oder Schwingungen aufweist, um Schäden am Bett und eine folgliche Größenverringerung oder -abbau der Teilchen (24) des Bettes (14) aufgrund der Erschütterung und/oder Schwingung zu reduzieren.

14. Verfahren nach Anspruch 13, **dadurch gekennzeichnet, dass** dieses das Fördern der Erschütterungs- und/oder Schwingungsabsorption durch Halten mehrerer Teile des Bettes (14) in mehreren Fächern (22) einschließt, wobei jedes Fach mindestens eine elastisch flexible Wand (20) aufweist, die die Teilchen (24) des Bettes (14) trägt und das Bett (14) in die Teile aufteilt.

15. Verfahren nach Anspruch 13 und Anspruch 14, **dadurch gekennzeichnet, dass** jede flexible Wand (20) luftdurchlässig ist, wobei die Luft entlang der luftdurchlässigen Innenräume der flexiblen Wände (20) geführt wird.

## Revendications

1. Réacteur chimique (10) à utiliser comme ou comme partie d'un appareil respiratoire, le réacteur (10) comprenant une cartouche ventilée (12) pour contenir un lit (14) d'un réactif chimique particulaire (24), la cartouche (12) présentant une paroi périphérique qui délimite l'intérieur de la cartouche (12), et la cartouche (12) présentant un fond pour l'intérieur de la cartouche (12), un support de lit perméable à l'air (16) qui recouvre la surface supérieure du fond pour supporter un lit (14) d'un réactif particulaire (24) à l'intérieur de la cartouche (12), la cartouche (12) présentant au moins un évent d'air supérieur à un niveau situé au-dessus du support de lit (16), et au moins un évent d'air inférieur (11) en dessous du support (16) et à travers le fond, le réacteur (10) étant **caractérisé en ce qu'**il comprend au moins un guide d'écoulement d'air perméable à l'air (20) à l'intérieur de la cartouche (12) pour guider un écoulement d'air entre le support de lit (16) et l'évent supérieur de la cartouche (12) et à travers un lit (14) d'un réactif chimique particulaire (24) supporté à l'intérieur de la cartouche (12) sur le support de lit (16) de la cartouche (12), chaque guide d'écoulement d'air (20) faisant saillie à partir d'une extrémité inférieure de celui-ci au ou à proximité du support de lit (16) de la cartouche (12), dans une direction vers le haut.

2. Réacteur selon la revendication 1, **caractérisé en ce que** la cartouche (12) a la forme d'une boîte rectangulaire ouverte au sommet (12) avec un fond rectangulaire plat recouvert par le support de lit (16), la boîte (12) contenant à l'intérieur de celle-ci un lit perméable à l'air (14) d'un réactif chimique particulaire (24) supporté sur le support de lit (16), chaque guide d'écoulement d'air (20) présentant une perméabilité à l'air qui est supérieure à la perméabilité à l'air du lit (14), le sommet ouvert de la boîte (12) formant l'évent supérieur de la boîte, et le fond présentant à travers celui-ci une pluralité d'évents inférieurs espacés uniformément dispersés (11).

3. Réacteur selon la revendication 2, **caractérisé en ce que** chaque guide d'écoulement d'air (20) est en contact avec le support de lit (16) de telle sorte qu'il repose sur et soit supporté par le support de lit (16), chaque guide d'écoulement d'air (20) faisant saillie vers le haut à partir du support de lit (16) jusqu'à une extrémité supérieure du guide d'écoulement d'air (20), ladite extrémité supérieure étant située à un niveau se trouvant à ou proche de la surface supérieure du lit (14), le contact entre chaque guide d'écoulement d'air (20) et le support de lit (16) permettant un écoulement d'air entre l'intérieur perméable à l'air de chaque guide d'écoulement d'air (20) et l'intérieur perméable à l'air du support de lit (16) où le guide d'écoulement d'air (20) repose sur le support de lit (16), la matière particulaire (24) du lit (14) étant une matière granulaire (24).

4. Réacteur selon l'une quelconque des revendications précédentes, **caractérisé en ce que** chaque guide d'écoulement d'air (20) présente une partie d'extrémité inférieure de section transversale agrandie, la section transversale de la partie d'extrémité inférieure s'amincissant vers le haut à partir d'une extrémité inférieure large de celle-ci à l'extrémité inférieure du guide d'écoulement d'air (20), jusqu'à une extrémité supérieure étroite et espacée de celle-ci au-dessus de l'extrémité inférieure large, l'extrémité supérieure étroite de la partie d'extrémité inférieure fusionnant dans une partie supérieure du guide d'écoulement d'air (20), ladite partie supérieure présentant une section transversale constante sur la totalité de sa hauteur.

5. Réacteur selon l'une quelconque des revendications précédentes, **caractérisé en ce que** chaque guide d'écoulement d'air (20) comprend une cloison (20) à l'intérieur de la cartouche (12) qui forme une paroi (20) pour séparer des parties d'un lit (14) d'un réactif chimique particulaire (24) à l'intérieur de la cartouche (12) les unes des autres ou l'une de l'autre.

6. Réacteur selon la revendication 5, **caractérisé en ce qu'**il n'est prévu qu'un seul guide d'écoulement d'air (20) qui comprend un diviseur de lit constitué d'une pluralité de cloisons (20) à l'intérieur de la cartouche qui forment des parois (20) qui divisent l'intérieur de la cartouche (12) en une pluralité de compartiments séparés (22) pour contenir des parties séparées d'un lit (14) d'un réactif chimique particulaire (24) à l'intérieur du récipient (12).

7. Réacteur selon l'une quelconque des revendications précédentes, **caractérisé en ce que** le support de lit (16) et chaque guide d'écoulement d'air (20) sont constitués d'une matière en treillis perméable à l'air et sont élastiquement flexibles.

8. Réacteur selon la revendication 7, **caractérisé en ce que** le support de lit (16) et chaque guide d'écoulement d'air (20) sont constitués d'une pluralité de couches élastiquement flexibles d'une matière en treillis tricoté.

9. Réacteur selon la revendication 8, **caractérisé en ce que** deux couches adjacentes du treillis tricoté de chaque guide d'écoulement d'air (20) sont espacées l'une de l'autre par un espace d'air.

10. Dispositif de secours autonome du type re-respiratoire, **caractérisé en ce qu'**il comprend un réacteur selon l'une quelconque des revendications précédentes à utiliser avec un réactif chimique particulaire (24) possédant des propriétés de purification d'air.

11. Procédé de fonctionnement d'un réacteur chimique (10) à utiliser comme ou comme partie d'un appareil respiratoire, le réacteur comprenant une cartouche éventée (12) pour contenir, à l'intérieur de la cartouche (12) sur un support de lit perméable à l'air (16) recouvrant la surface supérieure d'un fond de la cartouche (12), un lit (14) d'un réactif chimique particulaire (24), ledit lit (14) étant perméable à l'air, et dont les particules (24) peuvent être détériorées dans une condition dans laquelle le lit (14) présente une perméabilité à l'air réduite, **caractérisé en ce qu'**il comprend un guidage d'air à travers l'intérieur du lit (14) le long de zones intérieures perméables à l'air d'un ou de plusieurs guide(s) d'écoulement d'air perméable(s) à l'air (20), chacun de ces guides d'écoulement d'air (20) étant situé dans un lit (14), et chacun de ces guides d'écoulement d'air (20) s'étendant entre deux positions dans le lit (14) qui se trouvent respectivement au ou proches du support de lit (16) et à ou proches de la surface supérieure du lit (14).

12. Procédé selon la revendication 11, **caractérisé en ce que** le guidage de l'air comprend le guidage de celui-ci le long de passages d'écoulement d'air à l'intérieur des guides d'écoulement d'air (20).

13. Procédé selon la revendication 11 ou 12, **caractérisé en ce qu'**il comprend la conservation du lit (14) dans un ou plusieurs compartiment(s) (22) à l'intérieur de la cartouche (12), un ou plusieurs compartiment(s) (22) présentant au moins une paroi flexible (20) pour absorber des chocs et/ou absorber des vibrations, afin de réduire l'endommagement, et la réduction de taille et la détérioration qui en découlent, des particules (24) du lit (14) qui résultent desdits chocs et/ou desdites vibrations.

14. Procédé selon la revendication 13, **caractérisé en ce qu'**il comprend la facilitation de l'absorption desdits chocs et/ou desdites vibrations en conservant une pluralité de parties du lit (14) dans une pluralité de compartiments (22), chacun de ceux-ci présentant au moins une paroi élastiquement flexible (20) qui supporte les particules (24) du lit (14) et divise le lit (14) en lesdites parties.

15. Procédé selon la revendication 13 et la revendication 14, **caractérisé en ce que** chaque paroi flexible (20) est perméable à l'air, le guidage de l'air étant effectué le long des zones intérieures perméables à l'air des parois flexibles (20).
